# EUROPEAN PATENT APPLICATION

(11) **EP 4 600 623 A1**
(43) Date of publication of application: **13.08.2025**
(21) Application number: 25151741.3
(22) Date of filing: 14.01.2025
(51) Int. Cl.: G01M 3/00, G01M 3/20, G01M 3/24, G01M 3/38

(54) **DETECTION OF HYDROGEN OR SF6 LEAK WITH INDEX CONTRAST IMAGING**

(30) Priority: 08.02.2024 US 202418436823
(71) Applicant: Honeywell International Inc., Charlotte, NC 28202 (US)
(72) Inventor: VARTAK, Sameer Dinkar, Charlotte, 28202 (US); TRIPATHY, Janmejaya, Charlotte, 28202 (US); SHEN, Quan, Charlotte, 28202 (US); SURE, Anita, Charlotte, 28202 (US); KOTHARI, Sanjay, Charlotte, 28202 (US); GANESH, Bindu Rani, Charlotte, 28202 (US); ANTO, Agnel, Charlotte, 28202 (US); MALLERY, Ryan Patrick, Charlotte, 28202 (US); TAYLOR, Joel Edward, Charlotte, 28202 (US); KHURANA, Mohit, Charlotte, 28202 (US); PRABHU, Prashant, Charlotte, 28202 (US)
(74) Representative: Haseltine Lake Kempner LLP

(57) **Abstract**

A method and system for gas leak detection can involve analyzing image data of a scene in an industrial plant to identify a presence of a unique gas within the scene based on variations in a refractive index of the unique gas relative to surrounding materials, wherein the image data of the scene can be captured without an artificial background screen. Variations in the refractive index can be compared with typical index contrast imaging profiles to distinguish the unique gas from other substances within the scene. A signal or notification indicating a presence of a leak of the unique gas within or from the industrial plant can be output when the unique gas is distinguished from the other substances within the scene.

## Description

### TECHNICAL FIELD

Embodiments are generally related to the detection of gas leaks and in particular, the detection of leaks in industrial facilities of gases such as hydrogen, hydrogen fluoride and SF6. Embodiments also relate to the field of index contrast imaging.

### BACKGROUND

With the advent of the move by energy infrastructures toward renewable sources, industrial gases such as hydrogen (for energy generation) and SF6 (for insulation/arc prevention in high voltage electrical equipment for HVDC (High-Voltage Direct Current)) have become increasingly important. For example, detection of highly corrosive gases such as hydrogen fluoride gas is important for gas safety.

The critical role these gases play in the modern energy landscape also underscores the importance of addressing potential safety and performance issues associated with their use. SF6, or sulfur hexafluoride, is a colorless, odorless, non-flammable, and non-toxic gas. It is known for its high dielectric strength, which makes it an excellent insulator in high-voltage electrical equipment.

Hydrogen fluoride (HF) plays a crucial role in several renewable energy sources, particularly in the production and refinement of high-performance materials and in various industrial processes. Additionally, its detection and monitoring are essential due to its corrosive and potentially harmful nature when leaked into the environment. While HF has significant contributions to renewable energy technologies, its corrosive and toxic nature makes it imperative to detect leaks in industrial plants.

The introduction of gases such as HF, hydrogen and SF6 into energy infrastructure brings about unique safety concerns. Both gases, though beneficial, can be hazardous when handled improperly. For instance, hydrogen is highly flammable, which can pose a risk of explosions or fires in the event of leaks. As such, safety measures are crucial to prevent incidents, especially in areas where hydrogen is used for energy generation or storage. Furthermore, SF6 is an inert gas, but it can displace oxygen and cause asphyxiation in confined spaces if it leaks. Furthermore, if SF6 decomposes under electrical stress, it can produce byproducts that are harmful to human health.

Leaks of hydrogen or SF6 in energy infrastructure can lead to performance issues with both short-term and long-term consequences: In the case of hydrogen, any leakage can result in a reduction in the overall efficiency of energy generation systems. This impacts the overall productivity of renewable energy sources. When it comes to SF6, leaks can compromise the insulation properties that are crucial for high-voltage electrical equipment used in HVDC applications. This not only affects the equipment's reliability but also poses a risk of electrical arcing and potential damage.

HF exposure poses serious health risks, including severe skin, eye, and respiratory damage. Inhaling HF vapors or contact with the gas or its liquid form can result in severe burns and long-term health complications. Monitoring HF levels helps protect the health and safety of plant workers and the surrounding community.

In addition, HF is highly corrosive and can damage equipment, including pipelines and storage tanks, leading to costly repairs and potential accidents if not promptly addressed. Regular monitoring and detection of HF leaks can prevent equipment failures and associated risks.

In addition to safety and performance issues, there are environmental concerns associated with the use of these gases. Hydrogen, when released into the atmosphere, contributes to greenhouse gas emissions. SF6, on the other hand, is known for its high global warming potential, making containment and responsible management essential to reduce environmental impact.

The present inventors believe that a solution to the problems noted above involves the use of imaging technologies. Currently, however, there does not exist a product in the market, which adequately addresses the aforementioned leakage issues, and which involves imaging of gas leaks. Although some conventional approaches use IR camera spectroscopy, these solutions are relatively expensive and are incapable of detecting, for example, a hydrogen or HF gas leak. The present inventors believe that a low-cost imaging solution for detecting these types of leaks spatially would be a one possible solution. Index contrast imaging is one promising solution for detecting hot air and hydrogen flows in labs but requires a scattered points image screen behind the leak flow. Furthermore, index contrast imaging is not gas-specific and therefore is difficult to employ for the identification of the type of gas and/or distinguish it from normal hot air flow.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the embodiments to provide for an improved leak detection method, system, and apparatus.

It is another aspect of the embodiments to provide for a leak detection method, system, and apparatus that uses index contrast imaging.

It is a further aspect of the embodiments to provide for a leak detection method, system, and apparatus that achieves index contrast imaging for leak detection with a visible camera.

It is an additional aspect of the embodiments to provide for implementing for a leak detection method, system, and apparatus based on index contrast imaging and without the need for an artificial background screen.

The aforementioned aspects and other objectives can now be achieved as described herein. In an embodiment, a method for gas leak detection can involve: analyzing image data of a scene in an industrial plant to identify a presence of a unique gas within the scene based on variations in a refractive index of the unique gas relative to surrounding materials, wherein the image data of the scene is captured without an artificial background screen; comparing variations in the refractive index with typical index contrast imaging profiles to distinguish the unique gas from other substances within the scene; and outputting a signal or notification indicating a presence of a leak of the unique gas within or from the industrial plant when the unique gas is distinguished from the other substances within the scene.

In an embodiment, comparing variations in the refractive index with typical index contrast imaging profiles to distinguish the unique gas from other substances within the scene, can further involve: detecting a distortion of the scene and/or a projected light pattern due to a contrast in refractive indices of the unique gas and the other substances including air.

In an embodiment, the unique gas may be one or more of, for example: hydrogen, hydrogen fluoride, and SF6.

In an embodiment, the image data can be captured by a camera comprising two or more of, for example: a visible light camera, an IR camera, an SWIR camera, or a thermal camera.

An embodiment can further involve distinguishing the unique gas using an imager comprising one or more of, for example: a microwave imager, a millimeter wave imager, a terahertz imager, or an ultrasound imager.

An embodiment can further involve: identifying a location of the leak of the unique gas with leak location data obtained from an ultrasonic gas leak detector.

An embodiment can further involve: detecting a movement of a projected dot pattern with a light source; detecting an unusual movement of dots in the image data; and providing an indication of the leak in response to detecting the movement of the projected dot pattern and projecting the unusual movement of the dots in the image data.

An embodiment can further involve: encoding geospatial information associated with the industrial plant in a camera that capture the image data of the scene; and identifying possible sources of the unique gas in the industrial plant using the image data and the encoded geospatial information to further distinguish the unique gas from other substances within the scene.

An embodiment can further involve: utilizing one or more: CFD (Computational Fluid Dynamics) based training, AI (Artificial Intelligence) based training or image processing with respect to a CFD model, to enhance detection of the leak of the unique gas.

An embodiment can further involve: utilizing a fusion of sensors to locate the leak of the unique gas.

An embodiment can further involve: utilizing fluorescence as the signal or the notification indicating the presence of the leak of the unique gas.

In an embodiment, a system for gas leak detection, can include at least one processor and a non-transitory computer-usable medium embodying computer program code, the computer-usable medium capable of communicating with the at least one processor. The computer program code can include instructions executable by the at least one processor and configured for: analyzing image data of a scene in an industrial plant to identify a presence of a unique gas within the scene based on variations in a refractive index of the unique gas relative to surrounding materials, wherein the image data of the scene is captured without an artificial background screen; comparing variations in the refractive index with typical index contrast imaging profiles to distinguish the unique gas from other substances within the scene; an outputting a signal or notification indicating a presence of a leak of the unique gas within or from the industrial plant when the unique gas is distinguished from the other substances within the scene.

In an embodiment of the system, comparing variations in the refractive index with typical index contrast imaging profiles to distinguish the unique gas from other substances within the scene, can further comprise: detecting a distortion of the scene and/or a projected light pattern due to a contrast in refractive indices of the unique gas and the other substances including air.

In an embodiment of the system, the unique gas an comprises one or more, for example: hydrogen, hydrogen fluoride, and SF6.

In an embodiment of the system, the image data can be captured by a camera comprising at least two one of: a visible light camera, an IR camera, an SWIR camera, and a thermal camera.

In an embodiment of the system, the instructions can be further configured for: distinguishing the unique gas using an imager comprising at least one of: a microwave imager, a millimeter wave imager, a terahertz imager, and an ultrasound imager.

In an embodiment of the system, the instructions can be further configured for: identifying a location of the leak of the unique gas with leak location data obtained from an ultrasonic gas leak detector.

In an embodiment of the system, the instructions can be further configured for: detecting a movement of a projected dot pattern with a light source; detecting an unusual movement of dots in the image data; and providing an indication of the leak in response to detecting the movement of the projected dot pattern and projecting the unusual movement of the dots in the image data.

In an embodiment of the system, the instructions can be further configured for: encoding geospatial information associated with the industrial plant in a camera that capture the image data of the scene; and identifying possible sources of the unique gas in the industrial plant using the image data and the encoded geospatial information to further distinguish the unique gas from other substances within the scene.

In an embodiment, an apparatus for gas leak detection, can include: at least one sensor for capturing image data of a scene in an industrial plant, wherein the image data can be analyzed to identify a presence of a unique gas within the scene based on variations in a refractive index of the unique gas relative to surrounding materials, and the image data of the scene is captured without an artificial background screen, wherein variations in the refractive index can be compared with typical index contrast imaging profiles to distinguish the unique gas from other substances within the scene; and wherein a signal or notification indicating a presence of a leak of the unique gas within or from the industrial plant can be output, when the unique gas is distinguished from the other substances within the scene.

### BRIEF DESCRIPTION OF THE DRAWINGS

The accompanying figures, in which like reference numerals refer to identical or functionally similar elements throughout the separate views and which are incorporated in and form a part of the specification, further illustrate the present invention and, together with the detailed description of the invention, serve to explain the principles of the present invention.
FIG. 1 illustrates a leak detection system, which can be implemented in accordance with an embodiment;
FIG. 2A illustrates a flow chart of operations depicting logical operational steps of a method of image processing, which can be used by or as part of the leak detection system, in accordance with an embodiment;
FIG. 2B illustrates a continuation of the logical operational steps of the method shown in FIG. 2B, in accordance with an embodiment;
FIG. 3 illustrates a leak detection system and logical operational steps of a method for operating a light source, in accordance with an embodiment.

Identical or similar parts or elements in the figures may be indicated by the same reference numerals.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in an embodiment" or "in one embodiment" or "in an example embodiment" and variations thereof as utilized herein may or may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. Furthermore, the term "at least one" as used herein, may refer to "one or more." For example, "at least one widget" may refer to "one or more widgets."

In addition, the term "based on" may be understood as not necessarily intended to convey an exclusive set of factors and may, instead, allow for existence of additional factors not necessarily expressly described, again, depending at least in part on context.

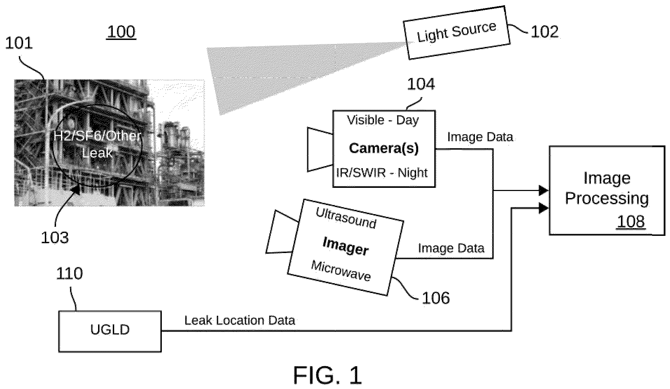

FIG. 1 illustrates a leak detection system 100, which can be implemented in accordance with an embodiment. The leak detection system 100 can be used to detect a leak 103 of a unique gas such as, for example, hydrogen, HF, or SF6 in an industrial plant 101. Note that the terms "industrial plant" and "plant" as utilized herein can be utilized to refer to the same industrial facility. The leak detection system 100 can use index contrast imaging as part of the leak detection process.

Note that the term "index contrast imaging" as utilized herein can relate to a technique used in image processing applications to enhance the visibility of fine details and edges in images by taking advantage of differences in the refractive index of objects in the scene. Index contrast imaging involves the refractive index (also called the optical density or refractive contrast) of a material. The refractive index is a measure of how much it can bend or refract light. When light passes from one material to another with a different refractive index, it changes direction, and this change is what enables us to see objects. In index contrast imaging, variations in the refractive index of objects can be utilized to create image contrast.

Note that when light passes through a sample, some parts of the sample may have a different refractive index than their surroundings. This difference can cause the light to change direction or scatter differently in those regions. This scattering and bending of light can be captured and analyzed to create high-contrast images that can highlight subtle variations in refractive index within the sample.

In some cases, a mirage effect may be due to refractive index difference between room temperature air and hot air. A room temperature index of air is about 1.0003 whereas it decreases to 1.0002 at 1000C, which is easily noticeable. Hydrogen has a refractive index of 1.0001, which has twice the refractive index contrast than a refractive index contrast of room temperature air and air at 100OC, which implies that a hydrogen leak can be visible as index contrast image. Also, a similarly refractive index of hydrogen fluoride and SF6 can be quite different than the air making their detection possible with index contrast imaging techniques.

The leak detection system 100 can include a light source 102 and one or more cameras such as camera(s) 104, which can include a visible light camera (for day) and/or an IR/SWIR camera (for night). In some embodiments, an additional camera such as a thermal camera may be utilized as one of the camera(s) 104.

The IR/SWIR camera of the camera(s) 104 an imaging device that can capture images and videos in the infrared (IR) and shortwave infrared (SWIR) regions of the electromagnetic spectrum. These cameras are specialized tools used for various applications that require the detection and visualization of light beyond the range of human vision. The IR camera can capture light in the infrared spectrum, which includes wavelengths longer than those of visible light (e.g., approximately 700 nanometers to 1 millimeter).

The IR camera can be used to detect heat variations, and can reveal temperature differences, identify energy inefficiencies, and detect objects or people in low-light or no-light conditions. The SWIR camera can operate in the shortwave infrared spectrum, which covers wavelengths typically from about 1,000 nanometers (1 micrometer) to 2,500 nanometers. The SWIR camera can be used in situations where traditional visible or near-infrared cameras do not perform well. The SWIR camera can penetrate haze, smoke, and fog, making them useful for surveillance, remote sensing, and imaging through various environmental conditions.

The visible light camera (or simply, "visible camera") of the cameras(s) 104 can capture images and videos within the range of the electromagnetic spectrum that is visible to the human eye. This range, known as the "visible spectrum," typically covers wavelengths from approximately 400 nanometers (violet) to 700 nanometers (red).

The leak detection system 100 can further include one or more imager(s) 106, which may be one or more of an ultrasound imager or a microwave imager. The ultrasound imager can use high-frequency sound waves (ultrasound) to create real-time, non-invasive images of internal structures. The microwave imager can be implemented as a remote sensing or imaging device that operates in the microwave portion of the electromagnetic spectrum, typically at frequencies ranging from about 1 gigahertz (GHz) to 100 gigahertz (GHz). The microwave imager can capture images and data from microwave radiation emitted or reflected by an object. The imager(s) 106 and the cameras(s) 104 can monitor the industrial plant 101 for the leak 103. It should be appreciated that different types of imagers may be utilized to implement the imager(s) 106 for use in distinguishing the gas and facilitating locating the gas leak. For example, the imager(s) 106 may be implemented as one or more of, for example, a microwave imager, a millimeter wave imager, a terahertz imager, and/or an ultrasound imager.

The leak detection system 100 can also include an ultrasonic gas leak detector (UGLD) 110 that also can be employed for monitoring the industrial plant 101 for the leak 103. The UGLD 110 can be implemented as a non-concentration base detector, which can detect ultrasound generated by pressurized gas escaping from leakage points. An ultrasound is a pulse signal in the air, which can be detected by the human ear the same way that is detected by a microphone. The human ear can only sense acoustic sound waves in the frequency range between 20 to 20 kHz and which is called the audible frequency range. The frequency range above 20 kHz up to 100 kHz is referred to as ultrasonic frequencies. The UGLD 110 can be designed to ignore the audible sound and lower ultrasonic frequencies and only sense ultrasonic frequencies in the range of 25 kHz to 70 kHz. Thus, a fusion of sensors with sensors such as the UGLD 110 can be used to facilitate locating the gas leak.

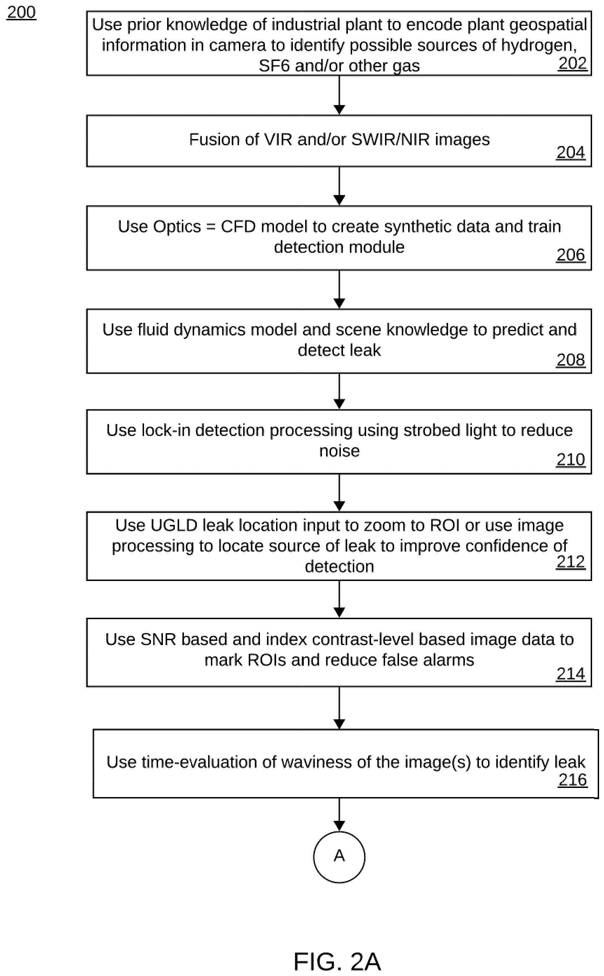

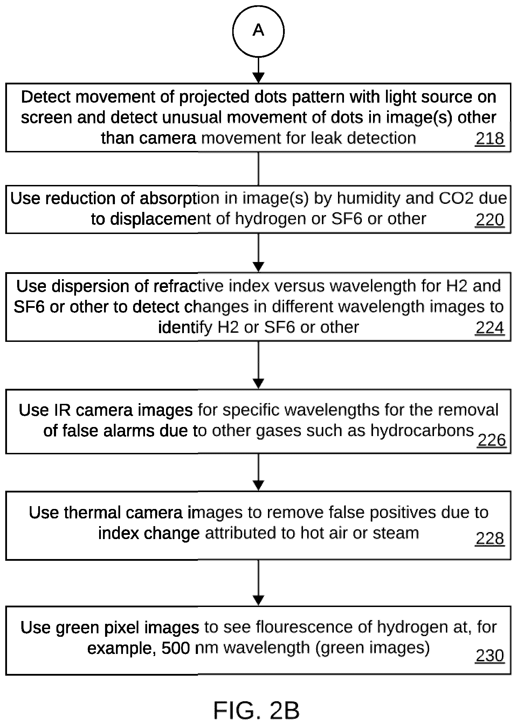

The leak detection system 100 can further include an image processing module 108, which can implement steps, operations, or instructions of an image processing method, such as shown in FIGS. 2A-2B herein. Note that the term *module* as utilized herein can relate to a collection of routines and data structures that perform a particular task or implements a particular data type. Modules may be composed of two parts: an interface, which lists the constants, data types, variable, and routines that can be accessed by other modules or routines, and an implementation, which may be typically private (accessible only to that module) and which includes source code that actually implements the routines in the module. The term *module* may also simply refer to an application, such as a computer program designed to assist in the performance of a specific task, such as word processing, accounting, inventory management, etc. In some example embodiments, the term "module" can also refer to a modular hardware component or a component that is a combination of hardware and software. A "module" can perform the various steps, operations or instructions discussed herein, such as the steps or operations discussed herein such as, for example, the steps, operations or instructions of method 200 shown in FIG. 2A and FIG. 2B and/or other steps/operations/instructions.

FIG. 2A illustrates a flow chart of operations depicting logical operational steps of a method 200 of image processing, which can be used by or as part of the leak detection system 100, in accordance with an embodiment. FIG. 2B illustrates a continuation of the logical operational steps of the method 200 shown in FIG. 2B, in accordance with an embodiment.

It should be understood that the specific order or hierarchy of steps, operations, or instructions in the methods disclosed is an illustration of exemplary approaches. For example, the various steps, operations or instructions discussed herein can be performed in a different order. Similarly, the various steps and operations of the disclosed example pseudo-code discussed herein can be varied and processed in a different order. Based upon design preferences, it is understood that the specific order or hierarchy of such steps, operation or instructions in the processes or methods discussed and illustrated herein may be rearranged. The accompanying claims, for example, may present elements of the various steps, operations or instructions in a sample order, and are not meant to be limited to the specific order or hierarchy presented. Similarly, in some embodiments not all of the presented steps, operations or instructions may be used. That is, all or fewer steps, operations or instructions may be implemented in different embodiments.

As shown at block 202, a step or operation can be implemented to use prior knowledge of the industrial plant 103 to encode plant geospatial information in camera(s) 104 to identify possible sources of hydrogen, SF6 and/or other gas. As depicted next at block 204, step or operation can be implemented to fuse VIR and/or SWIR/NIR images obtained from the camera(s) 104. Thereafter, as shown at block 206, a step or operation can be implemented to use an Optics = CFD (Computational Fluid Dynamics) model to create synthetic data and train a detection module. Then, as depicted at block 208, a step or operation can be implemented to use a fluid dynamics model and scene knowledge to predict and detect the leak 103.

Next, as shown at block 210, a step or operation can be implemented to use lock-in detection processing using strobe light from the light source 102 to reduce noise. As shown next at block 212, a step or operation can be implemented to use UGLD leak location input to zoom to a region of interest (ROI) or use image processing to locate the source of the leak 103 to improve a confidence of detection.

Then, as shown at block 214, a step or operation can be implemented to use signal-to-noise ratio (SNR) based and index contrast-level based image data to mark ROIs and reduce false alarms. Thereafter, as depicted at block 216, a step or operation can be implemented to use time-evaluation of waviness of the image(s) obtained from, for example, the image data provided by the imager(s) 106 and the camera(s) 104 to identify the leak 103. The process of method 200 continues from FIG. 2A to FIG. 2B as indicated by the circle A shown in both figures.

As shown at block 218 in FIG. 2B, a step or operation can be implemented to detect the movement of projected dots pattern with the light source 102 on screen and detect unusual movement of dots in image(s) other than camera movement for leak detection. As depicted next at block 220, a step or operation can be implemented to use a reduction of absorption in the image(s) by humidity and CO2 due to displacement of hydrogen or SF6 or another type of gas. Thereafter, as shown at block 224, a step or operation can be implemented to use the dispersion of refractive index versus wavelength for H2 and SF6 or another gas to detect changes in different wavelength images to identify H2 or SF6 or another gas.

As shown next at block 226, a step or operation can be implemented to use IR camera images to identify specific wavelengths for removal of false alarms due to other gases such as, for example, hydrocarbons. Then, as indicated at block 228, a step or operation can be implemented to use thermal camera images to remove false positives due to index change attributed to hot air or steam. Then, as shown at block 230, a step or operation can be implemented to use green pixel images to identify or "see" the fluorescence of, for example, hydrogen at 500 nm wavelength (green images).

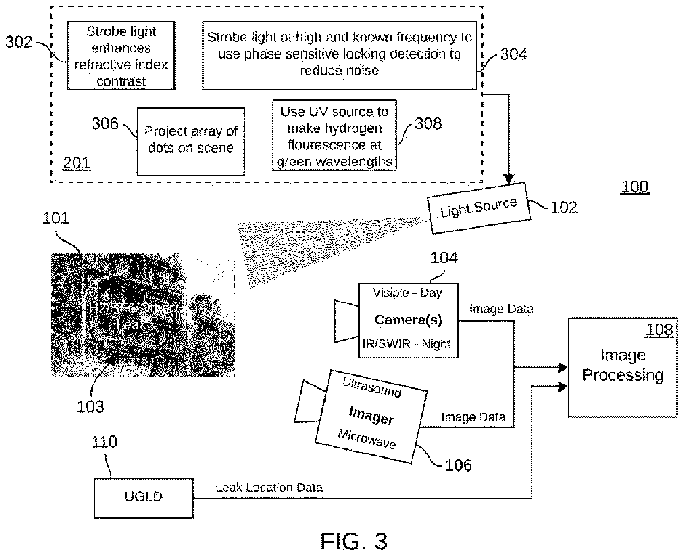

FIG. 3 illustrates the leak detection system 100 and logical operational steps of a module 201 for operating a light source, in accordance with another embodiment. The module 201 can implement steps or operations such as, for example, as shown at block 203 to use strobe light from light source 102 to enhance refractive index contrast. A step or operation can also be implemented to project an array of dots onto a scene, as shown at block 306. Another step or operation as shown at block 308, can be included with module 201 to use a UV source to make hydrogen fluorescence at green wavelengths. Fluorescence can thus be used as the signal or the notification indicating the presence of the leak of the gas. Furthermore, a step or operation can be implemented to use a strobe light from the light source 308 at a high and known frequency to use phase sensitive locking detection to reduce noise.

Note that phase sensitive locking detection referred to as phase-sensitive detection (PSD), also known as lock-in amplification or synchronous detection, is a technique that can be used to reduce noise and extract a weak signal of interest from a noisy background. This technique can involve a number of steps such as signal modulation, amplification and filtering, reference signals, phase locking, demodulation, and low-pass filtering. Signal modulation can be typically the first step in phase-sensitive detection and involves modulation of the signal of interest or the source of noise with a known reference signal. This modulation can be implemented by multiplying the signal with the reference signal, resulting in a modulated signal.

Amplification and filtering can involve a modulated signal that can be then passed through an amplifier and a band-pass filter. The amplifier can increase the amplitude of the modulated signal, and the band-pass filter can isolate the modulated component within a specific frequency range. The reference signal, synchronized with the modulation, can be used to serve as a reference phase. This reference signal can be generated by an oscillator or reference source at the same frequency as the modulation.

Phase locking is an important aspect of phase-sensitive detection and can be defined as the phase locking between the reference signal and the modulated signal. The reference signal can be used to lock the phase of the demodulation process with the phase of the modulated signal. Regarding demodulation, the demodulation process essentially multiplies the modulated signal with the reference signal. The result is a demodulated signal that can contain two components: the original signal of interest and the noise. Regarding low-pass filtering, a low-pass filter can be used to extract the component at the modulation frequency. This filter can facilitate removal of the noise component, leaving only the signal of interest, which is now much cleaner and easier to measure.

In some embodiments, various functions described above may be implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "transmit," "receive," and "communicate," as well as derivatives thereof, can encompass both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. A controller may be implemented in hardware or a combination of hardware and software/firmware. The functionality associated with any particular controller may be centralized or distributed, whether locally or remotely.

Based on the foregoing, it can be appreciated that a number of different embodiments are disclosed herein, including preferred and alternative embodiments. For example, in an embodiment a method for gas leak detection, can involve: analyzing image data of a scene in an industrial plant to identify a presence of a unique gas within the scene based on variations in a refractive index of the unique gas relative to surrounding materials, wherein the image data of the scene is captured without an artificial background screen; comparing variations in the refractive index with typical index contrast imaging profiles to distinguish the unique gas from other substances within the scene; and outputting a signal or notification indicating a presence of a leak of the unique gas within or from the industrial plant when the unique gas is distinguished from the other substances within the scene.

In an embodiment, comparing variations in the refractive index with typical index contrast imaging profiles to distinguish the unique gas from other substances within the scene, can further involve: detecting a distortion of the scene and/or a projected light pattern due to a contrast in refractive indices of the unique gas and the other substances including air.

In an embodiment, the unique gas can comprise, one or move of, for example, of: hydrogen, hydrogen fluoride, SF6, etc.

In an embodiment, the image data can be captured by a camera comprising one or more of: a visible light camera, an IR camera, an SWIR camera, and a thermal camera.

An embodiment of the method can involve distinguishing the unique gas using an imager comprising one or more of: a microwave imager, a millimeter wave imager, a terahertz imager, and an ultrasound imager.

An embodiment of the method can involve identifying a location of the leak of the unique gas with leak location data obtained from an ultrasonic gas leak detector.

An embodiment of the method can involve: detecting a movement of a projected dot pattern with a light source; detecting an unusual movement of dots in the image data; and providing an indication of the leak in response to detecting the movement of the projected dot pattern and projecting the unusual movement of the dots in the image data.

An embodiment of the method can involve: encoding geospatial information associated with the industrial plant in a camera that capture the image data of the scene; and identifying possible sources of the unique gas in the industrial plant using the image data and the encoded geospatial information to further distinguish the unique gas from other substances within the scene.

An embodiment of the method can involve utilizing one or more of: CFD (Computational Fluid Dynamics) based training, AI (Artificial Intelligence) based training or image processing with respect to a CFD model, to enhance detection of the leak of the unique gas.

An embodiment of the method can involve utilizing a fusion of sensors to locate the leak of the unique gas.

An embodiment of the method can involve utilizing fluorescence as the signal or the notification indicating the presence of the leak of the unique gas.

In an embodiment, a system for gas leak detection, can include at least one processor and a non-transitory computer-usable medium embodying computer program code, the computer-usable medium capable of communicating with the at least one processor, the computer program code comprising instructions executable by the at least one processor and configured for: analyzing image data of a scene in an industrial plant to identify a presence of a unique gas within the scene based on variations in a refractive index of the unique gas relative to surrounding materials, wherein the image data of the scene is captured without an artificial background screen comparing variations in the refractive index with typical index contrast imaging profiles to distinguish the unique gas from other substances within the scene; and outputting a signal or notification indicating a presence of a leak of the unique gas within or from the industrial plant when the unique gas is distinguished from the other substances within the scene.

In an embodiment of the system, comparing variations in the refractive index with typical index contrast imaging profiles to distinguish the unique gas from other substances within the scene, can further involve detecting a distortion of the scene and/or a projected light pattern due to a contrast in refractive indices of the unique gas and the other substances including air.

In an embodiment of the system, the unique gas can include one or more of hydrogen, hydrogen fluoride, SF6, etc.

In an embodiment of the system, the image data can be captured by a camera comprising one or more of, for example, a visible light camera, an IR camera, an SWIR camera, and/or a thermal camera.

In an embodiment of the system, the instructions can be further configured for: further distinguishing the unique gas using an imager comprising one or more of: a microwave imager, a millimeter wave imager, a terahertz imager, and an ultrasound imager.

In an embodiment of the system, the instructions can be further configured for identifying a location of the leak of the unique gas with leak location data obtained from an ultrasonic gas leak detector.

In an embodiment of the system, the instructions can be further configured for: detecting a movement of a projected dot pattern with a light source; detecting an unusual movement of dots in the image data; and providing an indication of the leak in response to detecting the movement of the projected dot pattern and projecting the unusual movement of the dots in the image data.

In an embodiment of the system, the instructions can be further configured for: encoding geospatial information associated with the industrial plant in a camera that capture the image data of the scene; and identifying possible sources of the unique gas in the industrial plant using the image data and the encoded geospatial information to further distinguish the unique gas from other substances within the scene.

In an embodiment, an apparatus for gas leak detection, can include at least one sensor for capturing image data of a scene in an industrial plant, wherein the image data can be analyzed to identify a presence of a unique gas within the scene based on variations in a refractive index of the unique gas relative to surrounding materials, and the image data of the scene can be captured without an artificial background screen. In an embodiment of the apparatus, the variations in the refractive index can be compared with typical index contrast imaging profiles to distinguish the unique gas from other substances within the scene. In an embodiment, a signal or notification indicating a presence of a leak of the unique gas within or from the industrial plant can be output when the unique gas is distinguished from the other substances within the scene.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. A method for gas leak detection, comprising:
analyzing image data of a scene in an industrial plant to identify a presence of a unique gas within the scene based on variations in a refractive index of the unique gas relative to surrounding materials, wherein the image data of the scene is captured without an artificial background screen;
comparing variations in the refractive index with typical index contrast imaging profiles to distinguish the unique gas from other substances within the scene; and
outputting a signal or notification indicating a presence of a leak of the unique gas within or from the industrial plant when the unique gas is distinguished from the other substances within the scene.

2. The method of claim 1 wherein comparing variations in the refractive index with typical index contrast imaging profiles to distinguish the unique gas from other substances within the scene, further comprises:
detecting a distortion of the scene and/or a projected light pattern due to a contrast in refractive indices of the unique gas and the other substances including air.

3. The method of claim 1 wherein the unique gas comprises at least one of: hydrogen, hydrogen fluoride, and SF6.

4. The method of claim 1 wherein the image data is captured by a camera comprising at least two one of: a visible light camera, an IR camera, an SWIR camera, and a thermal camera.

5. The method of claim 1 further comprising:
further distinguishing the unique gas using an imager comprising at least one of: a microwave imager, a millimeter wave imager, a terahertz imager, and an ultrasound imager.

6. The method of claim 1 further comprising:
identifying a location of the leak of the unique gas with leak location data obtained from an ultrasonic gas leak detector.

7. The method of claim 1 further comprising:
detecting a movement of a projected dot pattern with a light source;
detecting an unusual movement of dots in the image data; and
providing an indication of the leak in response to detecting the movement of the projected dot pattern and projecting the unusual movement of the dots in the image data.

8. The method of claim 1 further comprising:
encoding geospatial information associated with the industrial plant in a camera that capture the image data of the scene; and
identifying possible sources of the unique gas in the industrial plant using the image data and the encoded geospatial information to further distinguish the unique gas from other substances within the scene.

9. The method of claim 1 further comprising utilizing at least one of: CFD (Computational Fluid Dynamics) based training, AI (Artificial Intelligence) based training or image processing with respect to a CFD model, to enhance detection of the leak of the unique gas.

10. The method of claim 1 further comprising utilizing a fusion of sensors to locate the leak of the unique gas.

11. The method of claim 1 wherein further comprising utilizing fluorescence as the signal or the notification indicating the presence of the leak of the unique gas.

12. A system for gas leak detection, comprising:
at least one processor; and
a non-transitory computer-usable medium embodying computer program code, the computer-usable medium capable of communicating with the at least one processor, the computer program code comprising instructions executable by the at least one processor and configured for:
analyzing image data of a scene in an industrial plant to identify a presence of a unique gas within the scene based on variations in a refractive index of the unique gas relative to surrounding materials, wherein the image data of the scene is captured without an artificial background screen;
comparing variations in the refractive index with typical index contrast imaging profiles to distinguish the unique gas from other substances within the scene; and
outputting a signal or notification indicating a presence of a leak of the unique gas within or from the industrial plant when the unique gas is distinguished from the other substances within the scene.

13. The system of claim 12 wherein comparing variations in the refractive index with typical index contrast imaging profiles to distinguish the unique gas from other substances within the scene, further comprises:
detecting a distortion of the scene and/or a projected light pattern due to a contrast in refractive indices of the unique gas and the other substances including air.

14. The system of claim 12 wherein the instructions are further configured for:
identifying a location of the leak of the unique gas with leak location data obtained from an ultrasonic gas leak detector.

15. An apparatus for gas leak detection, comprising:
at least one sensor for capturing image data of a scene in an industrial plant,
wherein the image data is analyzed to identify a presence of a unique gas within the scene based on variations in a refractive index of the unique gas relative to surrounding materials, and the image data of the scene is captured without an artificial background screen,
wherein variations in the refractive index are compared with typical index contrast imaging profiles to distinguish the unique gas from other substances within the scene; and
wherein a signal or notification indicating a presence of a leak of the unique gas within or from the industrial plant is output when the unique gas is distinguished from the other substances within the scene.
